# EUROPÄISCHE PATENTSCHRIFT

(11) **EP 1 023 755 B1**
(45) Veröffentlichungstag und Bekanntmachung des Hinweises auf die Patenterteilung: **13.06.2007**
(21) Anmeldenummer: 98949000.8
(22) Anmeldetag: 01.10.1998
(51) Int. Cl.: H02H 5/00, G01W 1/16, H02H 3/22

(54) **SCHUTZVORRICHTUNG, INSBESONDERE BLITZSCHUTZ**
PROTECTIVE DEVICE, ESPECIALLY FOR PROTECTION AGAINST LIGHTNING
DISPOSITIF DE PROTECTION, NOTAMMENT DISPOSITIF DE PROTECTION CONTRE LA FOUDRE

(30) Priorität: 01.10.1997 DE 19744129
(43) Veröffentlichungstag der Anmeldung: 02.08.2000
(73) Patentinhaber: Spherics Mess- Und Analysetechnik GMBH, 96215 Lichtenfels (DE)
(72) Erfinder: PABST, Michael, J., D-96231 Staffelstein-Neubanz (DE); BUGLA, Gregor, D-96049 Bamberg (DE)
(74) Vertreter: Dreykorn-Lindner, Werner
(86) Internationale Anmeldenummer: PCT/EP1998/006252
(87) Internationale Veröffentlichungsnummer: WO 1999/017413

(56) Entgegenhaltungen:
- EP-A- 0 693 696
- US-A- 4 276 576
- US-A- 5 291 208

## Beschreibung

Die Erfindung bezieht sich auf eine Vorrichtung zum Schutz eines elektrischen Verbrauchers gegen gewittterbedingte Überspannungen im Versorgungsnetz gemäß dem Oberbegriff des Anspruchs 1. Eine derartige Vorrichtung ist z.B. aus der US 4, 276, 576 bekannt. Unter gewitterbedingten Überspannungen werden hierbei insbesondere Überspannungen und Überströme infolge atmosphärischer Ent- und Aufladungen verstanden.

Ein derartiger Schutz gegen gewitterbedingte Überspannungen, ein sogenannter Blitzschutz, dient als Maßnahme zur Vermeidung von Schäden an Verbrauchern oder Endgeräten, die an ein Versorgungsnetz angeschlossen sind. Derartige Verbraucher sind üblicherweise elektrische oder elektronische Endgeräte, die an eine 110V- oder 220V-Versorgungsspannung angeschlossen werden.

Während bisherige Schutzmaßnahmen darauf ab zielen erst, infolge eines Blitzschlages auftretende Überspannungen vom Verbraucher oder Endgerät dadurch fernzuhalten, dass eine galvanische Trennung oder gezielte Ableitungen der durch atmosphärische Ent- und Aufladungen bedingten Überströme und Überspannung gegen Erde erfolgt, ist aus der US 4, 276, 576 bereits ein Blitzschutzgerät mit Relaisschalter zum Isolieren elektrischer Anlagen bei solchen atmosphärischen Berechnungen bekannt, die im Umkreis eines Gewitters von z.B. 20 Kilometern detektierbar sind und somit einen Blitzschlag am Detektionsort wahrscheinlich machen. Derartige Schutzmaßnahmen reichen jedoch in vielen Fällen, insbesondere bei empfindlichen elektrischen oder elektronischen Endgeräten, nicht aus.

Der Erfindung liegt daher die Aufgabe zugrunde, eine Schutzvorrichtung anzugeben, die einen besonders zuverlässigen Schutz eines elektrischen Verbrauchers gegen gewitterbedingte Überspannungen gewährleistet.

Diese Aufgabe wird erfindungsgemäß gelöst durch die Merkmale des Anspruchs 1. Dazu wertet eine mit einem Empfänger verbundene Auswerteeinrichtung das empfangene Spherics-Signal hinsichtlich der daraus abgeleiteten Impulshäufigkeit aus und generiert bei erhöhtem Risiko von gewitterbedingten Überspannungen ein Steuersignal zur Abschaltung des Verbrauchers vom Versorgungsnetz.

Dabei erfolgt nicht erst im Falle von Überspannungen infoige von Blitzeinschlägen eine Trennung des Verbrauchers vom Versorgungsnetz, sondern es erfolgt nach Art eines prädikativen Blitzschutzes oder auseilenden Schutzes gegen Überspannungen eine Trennung vom Versorgungsnetz bereits beim Auftreten zu erwartender Überspannungen.

Der Erfindung liegt daher die Erkenntnis zugrunde, dass derartige Spherics-Signale elektromagnetische Signale in Form von unregelmäßig geformten Strahlungsimpulsen, sind die von dynamischen Prozessen in der Atmosphäre, beispielsweise im Vorfeld von Gewitter- oder Wetterfronten oder in konvektiven Bewölkungsformen, auftreten. Dabei sind einzeine Parameter der Spherics-Signale, wie z.B. die Anzahl, die Amplitude, die Frequenz der Schwingungen, die lmpulsfolgefrequenz, die Häufigkeitsverteilung auf die Frequenzwerte und die Signalformen, eng mit den sie auslösenden Wettervorgängen, insbesondere mit der Art und Bewegung von atmosphärischen Luftmassen, verknüpft. Durch Auswerten des empfangenen Spherics-Signals hinsichtlich der Impulshäufigkeit sind daher bereits frühzeitig gewitterbedingte Überspannungen besonders zuverlässig vorhersehbar.

Diese Spherics-Signale haben eine lmpulsdauer bis zu einigen 100µs und bestehen aus einer oder mehreren Schwingungen, deren Schwingungsfrequenz im Niederfrequenzbereich bis etwa 100kHz und damit im Langwellenbereich liegen. Die maximale Amplitude der Spherics-Signale hängt von der Art und der Entfernung der Signalquelle ab und beträgt für den elektrischen Feldvektor bis zu einigen Volt pro Meter. Die typischen Entladungssiromstärken sind kleiner als 1kA, so dass die effektive Reichweite auf etwa 50km begrenzt ist.

In vorteilhafter Ausgestaltung enthält daher der Empfänger der Schutzvorrichtung eine magnetische Antenne, beispielsweise eine magnetische Rahmen- oder Ferritkernantenne, zum Empfangen von Langwellen, deren Quelle im Nahbereich liegt. Dadurch kann die im Bereich eines Gewittergebietes liegende Schutzvorrichtung das im Vorfeld eines Gewitters erzeugte Spherics-Signal empfangen. Die magnetische Rahmenantenne dient als Meßsonde zur Registrierung der elektrischen Aktivität infolge eines erheblichen Anstiegs der natürlichen lmpulsstrahlung der Atmosphäre aufgrund sich aufbauender Gewitterzellen oder Gewitterfronten. Diese Größe wird zur Prognose von Gewittern und somit zur Bewertung des Überspannungsrisikos verwendet. Dabei bedeutet eine verstärkt auftretende lmpulsstrahlung ein hohes Risiko von Blitzereignissen und somit ein hohes Risiko von Überspannungen.

Zur Generierung eines detektierbaren und analysierbaren Meßsignals ist zweckmäßigerweise der Antenne ein rauscharmer Verstärker, beispielsweise ein Operationsverstärker, nachgeschaltet. Dieser transformiert die von der Antenne gemessenen elektromagnetischen Impulse auf einen Spannungsbereich von vorzugsweise 1V bis 2V. Anschließend wird zweckmäßigerweise das gebildete Meßsignal mittels eines dem Verstärker nachgeschalteten analogen Filterbausteins in die für Blitzereignisse charakteristischen spektralen Anteile zerlegt. Durch diese Art der Vorfilterung werden Rauscheinflüsse und zumindest teilweise auch technische Störeinflüsse reduziert. Zur besonders zuverlässigen Selektierung des empfangenen Spherics-Signals von technischen Störungen ist zweckmäßigerweise eine Detektor-Logik-Einheit vorgesehen, die anhand der Amplitude und des Zeitverlaufes das Spherics-Signal erkennt und eine Unterscheidung von technischen Störungen vornimmt.

Die Analyse des Spherics-Signals erfolgt in vorteilhafter Weiterbildung prozessorgesteuert mittels eines Signalprozessors, vorzugsweise eines 8 BIT-Microcontrollers. Diesem ist eingangsseitig ein Analog-/Digital-Wandler (A/D-Wandler) vorgeschaltet, der insbesondere im Hinblick auf eine spätere Analyse die Maximalamplitude des Signals bestimmt und in ein digitales Datenformat, vorzugsweise in ein 8 BIT-Datenwort, umwandelt.

Die Logikeinheit oder Detektorlogik generiert bei der Detektion einer Impulsstrahlung ein Steuersignal für den Signalprozessor zum Einlesen der Maximal- oder Spitzenamplitude. Aus der mit der Impulsamplitude gewichteten Häufigkeit der ankommenden Impulse berechnet der Signalprozessor das Risiko von Blitzeinschlägen und somit von unzulässig hohen gewitterbedingten Überspannungen. Anhand dieser Daten generiert der Signalprozessor ein digitales Steuersignal oder einen Risikowert, der mit einem LCD-Display angezeigt werden kann.

Das von der Auswerteeinrichtung generierte digitale Steuersignal wird zweckmäßigerweise einem Schwellwertschalter zugeführt, mit dem die Schwelle zur Trennung eines angeschlossenen Gerätes oder Verbrauchers eingestellt und damit festgelegt werden kann. Übersteigt der Wert des Steuersignals den eingestellten Schwellwert, so wird zweckmäßigerweise über einen Treiberbaustein ein Schaltrelais angesteuert, das die Netztrennung und damit die Abschaltung des Verbrauchers vom Versorgungsnetz vornimmt.

Die Schutzvorrichtung, deren Signalprozessor zweckmäßigerweise mittels eines Quarzes getaktet wird, ist vorteilhafterweise zusätzlich mit einer Watchdog-Schaltung versehen, die eine permanente Überwachung der Vorrichtung vornimmt. Findet beispielsweise ein überspannungsbedingter Systemausfall statt, so wird die Schutzvorrichtung innerhalb weniger Millisekunden erneut gestartet.

Die mit der Erfindung erzielten Vorteile bestehen insbesondere darin, dass durch eine Schutzvorrichtung mit einer einem Empfänger nachgeschalteten Auswerteeinrichtung für ein empfangenes Spherics-Signal ein zuverlässiger Schutz eines elektrischen Verbrauchers gegen gewitterbedingte Überspannungen im Versorgungsnetz gewährleistet ist. Der Schutz wirkt dabei prädiktiv oder vorauseilend, so dass eine Trennung des elektrischen Verbrauchers vom Versorgungsnetz bereits erfolgt ist, wenn mit hoher Wahrscheinlichkeit erwartete gewitterbedingte Überspannungen infolge eines Blitzeinschlags auftreten. Eine automatische galvanische Trennung des elektrischen Verbrauchers von der Versorgungs- oder Netzspannung erfolgt dabei vorteilhafterweise möglichst kurzzeitig vor Auftreten einer möglichen Überspannung, d.h. bei einem erhöhten Risiko von Überspannungen infolge von Blitzeinschlägen. Dadurch wird einerseits ein Geräteschaden, der bisher infolge des zu trägen Abschaltvorganges auftrat, sicher vermieden. Andererseits wird die bestimmungsgemäße Nutzung des elektrischen Verbrauchers nicht unnötig eingeschränkt.

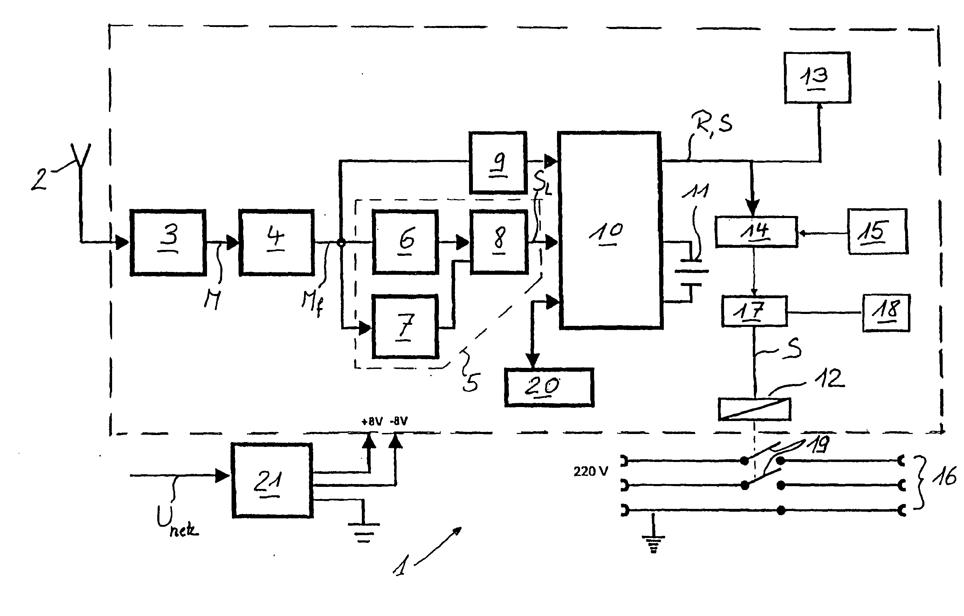

Nachfolgend wird ein Ausführungsbeispiel der Erfindung anhand einer Zeichnung näher erläutert. Darin zeigt die Figur schematisch in Form eines Blockschaltbilds eine prädiktive Schutzvorrichtung für einen elektrischen Verbraucher.

Die in der Figur schematisch dargestellte Schutzvorrichtung 1 umfasst einen Empfänger mit einer magnetischen Rahmenantenne oder Ferritkemantenne 2 und einen Verstärker 3, dem ein analoger Filter 4 nachgeschaltet ist. Die Antenne 2 dient als Meßsonde zur Registrierung der elektrischen Aktivität infolge eines Anstiegs der natürlichen Impulsstrahlung der Atmosphäre im Langwellen-Bereich. Die Antenne 2 wird beispielsweise mittels eines etwa 5m langen Kabels an einer Gebäudewand oder dergleichen befestigt. Der nachgeschaltete Verstärker 3, beispielsweise ein Operationsverstärker, transformiert das empfangene Signal auf einen Spannungsbereich von vorzugsweise 1 V bis 2V. Das vom Verstärker 3 generierte Meßsignal M wird im Filter 4 in die für Blitzereignisse charakteristischen spektralen Anteile zerlegt. Durch diese Art der Vorfilterung werden Rauscheinflüsse und teilweise auch technische Störeinflüsse reduziert.

Das gefilterte Meßsignal M_{f} wird einer Logikeinheit oder einem Logikdetektor 5 zugeführt. Die Logikeinheit 5 umfasst einen Amplitudendetektor 6 zur Bestimmung der Maximalamplitude des Meßsignals M_{f} und einen Zähler 7 sowie eine mit diesem und mit dem Amplitudendetektor 6 eingangsseitig verbundenen Steuerlogikbaustein 8. Die Logikeinheit 5 dient zur Erkennung eines empfangenen Spherics-Signals anhand der Amplitude und des Zeitverlaufes des Meßsignals M_{f} und nimmt eine Unterscheidung oder Trennung dieses Spherics-Signals von technischen Störungen vor. Parallel zur Logikeinheit 5 liegt ein A/D-Wandler 9, beispielsweise ein 8 Bit ADU, der die Maximalamplitude des Meßsignals M_{f} insbesondere zum Zwecke einer späteren Analyse in ein digitales Datenformat umwandelt.

Die digitale Signalanalyse wird mit Hilfe einer geeigneten, beispielsweise in einem EPROM abgelegten Software vorgenommen. Dabei kann die Signalanalyse oder Auswertung auch mittels Fuzzy-Logik erfolgen, so dass ein entsprechender Algorithmus in einer Auswerteeinrichtung in Form eines Signalprozessors 10 vorgesehen ist. Diesem wird ein von der Logikeinheit 5 bei der Detektion einer Impulsstrahlung generiertes Steuersignal S_{L} zum Einlesen der Spitzenamplitude des Meßsignals M_{f} zugeführt. Der mittels eines Quarzes 11 getaktete Signalprozessor 10 berechnet aus der mit der Amplitude gewichteten Häufigkeit der ankommenden Impulse das Risiko von Blitzeinschlägen anhand des empfangenen und selektierten Spherics-Signals. Im Ergebnis liefert der Signalprozessor 10 einen digitalen Risikowert R, der gleichzeitig als Steuersignal S für ein Schaltrelais 12 dient. Der Risikowert R wird einem LCD-Display 13 zugeführt und dort alphanumerisch dargestellt.

Der Risikowert R wird außerdem einem Schwellwertschalter 14 zugeführt, der mit einem Einstellregler 15, beispielsweise in Form eines Potentiometers, verbunden ist. Dadurch kann die Schwelle zur Trennung eines an ein 220V-Versorgungsnetz 16 angeschlossenen (nicht dargestellten) elektrischen Gerätes oder Verbrauchers festgelegt werden. Übersteigt der Risikowert R den eingestellten Schwellwert, so wird über einen Treiberbaustein 17, der mit einer LED-Anzeige 18 verbunden ist, das Schaltrelais 12 angesteuert. Das Schaltrelais 12 nimmt über einen mit diesem gekoppelten Schalter 19 eine zweipolige Trennung des Verbrauchers vom Versorgungsnetz 16 vor.

Der Signalprozessor 10 ist mit einer Watchdog-Schaltung 20 zur permanenten Überwachung der Schutzvorrichtung 1 verbunden. Ferner ist zur Versorgung der Schutzvorrichtung 1 ein stabilisiertes Netzteil 21 vorgesehen, das aus einer zugeführten Netzspannung U_{netz} ausgangsseitig eine ±8V-Betriebsspannung liefert. Die Schutzvorrichtung 1 ist in nicht näher dargestellter Art und Weise vorteilhafterweise in ein Gehäuse in Form einer Mehrfachsteckdose oder einer Zeitschaltuhr integriert, so dass die Schutzvorrichtung 1 zwischen eine Netzsteckdose und den elektrischen Verbraucher geschaltet werden kann.

Die Schutzvorrichtung 1 eignet sich zweckmäßigerweise zur Schaltung von Netzspannungen bis 230V und Schaltströmen von bis 10A. Die Gehäuseabmessungen betragen zweckmäßigerweise 100mm x 100mm x 30mm. Die Leistungsaufnahme beträgt im Ruhezustand weniger als 50mW und im Meßzustand weniger als 180mW. Im Schaltzustand beträgt die Leistungsaufnahme weniger als 2W. Das Gewicht der gesamten Schutzvorrichtung 1 beträgt weniger als 500g.

Mittels der Schutzvorrichtung 1 erfolgt somit eine Bewertung des Risikos von gewitterbedingten Überspannungen im Versorgungsnetz 16 oder auf den entsprechenden Versorgungsleitungen durch Messung und Auswertung der lokal vorhandenen natürlichen Impulsstrahlung der Atmosphäre. Dazu erfolgt eine Detektion und Analyse eines erfassten oder empfangenen Spherics-Signals. Eine verstärkt auftretende lmpulsstrahlung bedeutet dabei ein hohes Risiko von Blitzereignissen und somit ein hohes Risiko von Überspannungen.

Da das Risikomaß zwischen 0% und 100% liegt, ist die Risikoschwelle, bei der eine Trennung vom Versorgungsnetz 16 erfolgt, mittels des Schwellwertschalters 14,15 entsprechend einschaltbar. Demnach kann der Benutzer die Schwelle derart festlegen, dass einerseits auch bei geringstem Risiko einer möglichen Überspannung bereits eine Abschaltung erfolgt, während ebenso die Möglichkeit besteht, eine Schwelle zu wählen, bei der in stets durchgeschaltetem Zustand der elektrische Verbraucher auch bei einer hohen Gefährdungslage nicht abgeschaltet wird.

Durch Verwendung eines entsprechend programmierten Signalprozessors 10, vorzugsweise eines 8 Bit-Microcontrollers, kann auch eine mittels Fuzzy-Logik arbeitende prozessorgesteuerte Auswertung des Meßsignals M_{f} und damit des Risikos von gewitterbedingten Überspannungen erfolgen. Dadurch wird ein zuverlässiger Schutz des elektrischen Verbrauchers vor einer Einkopplung von unzulässig hohen Überspannungen erzielt.

### Bezugszeichenliste

- 1: Versorgungsschutz/Blitzschutz
- 2: Antenne
- 3: Verstärker/Operationsverstärker
- 4: Filter
- 5: Logikeinheit/Detektoriogik
- 6: Amplitudendetektor
- 7: Zähler
- 8: Steuerlogik
- 9: A/D-Wandler
- 10: Signalprozessor/Auswerteeinrichtung
- 11: Quarz
- 12: Schaltrelais
- 13: LCD-Display
- 14: Schwellwertschalter
- 15: Einstellregler
- 16: Versorgungsnetz
- 17: Treiber
- 18: LED-Anzeige
- 19: Schalter
- 20: Watchdog-Schaltung
- 21: Netzteil

- M,M_{f}: Meßsignal
- R: Risikowert
- S,S_{L}: Steuersignal
- U_{netz}: Netzspannung

## Patentansprüche

1. Vorrichtung zum Schutz eines elektrischen Verbrauchers gegen gewitterbedingte Überspannungen im Versorgungsnetz (16), mit einer einem Empfänger (2) nachgeschalteten Auswerteeinrichtung (10) für ein empfangenes Spherics-Signal, und mit einer Schalteinrichtung (12,19) zur Abschaltung des Verbrauchers vom Versorgungsnetz (16) in Abhängigkeit eines von der Auswerteeinrichtung (10) generierten Steuersignals (S), **dadurch gekennzeichnet, dass** die Auswertung des empfangenen Spherics-Signals (M_{f}) hinsichtlich der daraus abgeleiteten Impulshäufigkeit erfolgt.

2. Vorrichtung nach Anspruch 1, **dadurch gekennzeichnet, dass** dem eine.magnetische Antenne (2) enthaltenden Empfänger eine Signalaufbereitunosstufe (3,4) mit einem analogen Filterbaustein (4) zur spektralen Analyse des empfangenen Signals (M) nachgeschaltet ist.

3. Vorrichtung nach Anspruch 1, **dadurch gekennzeichnet, dass** die Signalaufbereitungsstufe einen Verstärker (3) zur Transformation des empfangenen Signals (M) auf einen vorgegebenen Spannungsbereich, vorzugsweise von 1V bis 2V, aufweist.

4. Vorrichtung nach einem der Ansprüche 1 bis 3, **dadurch gekennzeichnet, dass** die Auswerteeinrichtung einen digitalen Signalprozessor (10) zur digitalen Auswertung der aus dem empfangenen Spherics-Signals (M_{f}) abgeleiteten Impulshäufigkeit und Impulsamplitude umfaßt.

5. Vorrichtung nach Anspruch 4, **dadurch gekennzeichnet, dass** dem Signalprozessor (10) ein A/D-Wandler (9) zur Generierung eines die Maximalamplitude repräsentierenden Mehrbit-Datenwortes und eine Logikeinheit (5) zur Erzeugung eines aus der lmpulshäufigkeit abgeleiteten Steuersignals (S_{L}) zum Einlesen der Maximalamplitude vorgeschaltet sind.

6. Vorrichtung nach Anspruch 5, **dadurch gekennzeichnet, dass** die Logikeinheit (5) einen Amplitudendetektor (6) und eine diesem nachgeordnete Steuerlogik (8) aufweist, die eingangsseitig mit einem Zähler (7) verbunden ist.

7. Vorrichtung nach einem der Ansprüche 1 bis 6, **dadurch gekennzeichnet, dass** die Auswerteeinrichtung (10) ausgangsseitig mit einem Schaltrelais (12) verbunden ist, das mit einem im Verbrauchernetz (16) vorgesehenen ein- oder mehrpoligen Schalter (19) gekoppelt ist.

8. Vorrichtung nach Anspruch 7, **dadurch gekennzeichnet, dass** die Auswerteeinrichtung (10) über einen einstellbaren Schwellwertschalter (14,15) mit dem Schaltrelais (12) verbunden ist.

9. Vorrichtung nach einem der Ansprüche 1 bis 7, **dadurch gekennzeichnet, dass** die Auswerteeinrichtung (10) ein Ausgangssignal (R,S) an ein LCD-Display (13) zur digitalen Anzeige eines Risikowertes (R) für eine mögliche Überspannung abgibt.

10. Vorrichtung nach einem der Ansprüche 4 bis 9, **dadurch gekennzeichnet, dass** dem Signalprozessor (10) ein Quarz (11) zur Vorgabe einer Taktfrequenz zugeordnet ist.

## Claims

1. Device for protecting an electrical consumer against surges in a supply network (16) caused by thunderstorms, comprising a receiver (2), a series-connected evaluating device for carrying out an analysis of a received spherics signal and a switching equipment (12,19) for disconnecting the consumer from said supply network (16) according to a control signal (S), generated by said evaluating device, **characterized in that** the evaluation of said received spherics signal (Mf) depends from the pulse rate deduced from said spherics signals.

2. Device according to claim 1, wherein said receiver (2) includes a magnetic antenna and a series-connected signal processing unit (3, 4) comprising an analogue filter (4) for the spectral analysis of an received signal (M).

3. Device according to claim 2, wherein said signal processing unit (3, 4) further comprises an amplifier (3) for the transformation of said received signal (M) to a defined voltage range, preferably from 1V to 2V.

4. Device according to one of claims 1 to 3, wherein said evaluating device includes a digital signal processing unit (10) for carrying out an analysis of pulse rate and pulse amplitude derived from said received spherics signal (Mf).

5. Device according to claim 4, wherein an Analogue-Digital-Converter (9) for generating a multi-bit data word representing the maximal amplitude and an logical unit (5) for generating a control signal (S_{L}), deduced from the pulse rate in order to read in the maximal amplitude are series-connected to said signal processing unit (10).

6. Device according to claim 5, wherein said logical unit (5) includes an amplitude detector (6) and a series-connected control unit (8), which is connected with a counter (7) at the input side.

7. Device according to one of the claims 1 to 6, wherein said evaluating device is connected at the output side with a switching relay (12), coupled with a one-pole or multi-pole switch located at said supply network (16).

8. Device according to claim 7, wherein said evaluating device is connected by an adjustable threshold value switch (14, 15), to said switching relay (12).

9. Device according to one of the claims 1 to 7, wherein said evaluating device discharges an output signal (R, S), to a LCD display (13) displaying in digital form the risk value of an possible overvoltage.

10. Device according to one of the claims 4 to 9, wherein further said signal processor (10) a quartz clock (11) for providing the clock frequency is assigned.

## Revendications

1. Dispositif pour la protection d'un consommateur de l'énergie électrique contre de surtensions provoquées par d'orages dans un réseau de distribution d'énergie électrique (16), avec un récepteur (2) suivi par un dispositif d'exploitation de données pour la réception d'un signal de parasites atmosphériques, avec un commutateur (12, 19) pour le coupage de consommateur du réseau de distribution d'énergie électrique en fonction d'un signal de commande (S) étant généré par le dispositif d'exploitation de données est **caractérisé en ce que** l'exploitation du signal de parasites atmosphériques reçu (M_{f}) s'effectue en utilisant la densité d'impulsions issues de ces signaux.

2. Dispositif selon la revendication 1, dans lequel le récepteur (2) possédant une antenne magnétique étant suivi par un étage de traitement de signaux (3, 4) avec un filtre analogique pour l'analyse spectrale du signal reçu (M).

3. Dispositif selon la revendication 1, dans lequel l'étage de traitement de signaux (3, 4) possède un amplificateur (3) pour la transformation du signal reçu (M) à un niveau de tension étant situé entre 1V et 2V de préférence.

4. Dispositif selon des revendications 1 à 3, dans lequel le dispositif d'exploitation de données contient un processeur numérique de signaux (10) pour une exploitation numérique de la densité et de l'amplitude d'impulsions issues des parasites atmosphériques reçus.

5. Dispositif selon la revendication 4, dans lequel l'entrée du processeur de signaux (10) est connecté un convertisseur analogique-numérique (9) pour générer des données en byte représentant l'amplitude maximale et un commutateur logique (5) pour générer un signal de commande (S_{L}) en fonction, de la densité d'impulsions étant utilisé pour mémoriser l'amplitude maximale.

6. Dispositif selon la revendication 5, dans lequel le commutateur logique (5) possède un détecteur d'amplitude (6) et une logique de commande (6) en aval étant connecté à son entrée avec un compteur (7).

7. Dispositif selon des revendications 1 à 6, dans lequel le dispositif d'exploitation de données est connecté à sa sortie avec un relais (12) étant connecté à un contacteur (19)' mono- ou multicontacts situé dans le réseau de distribution d'énergie électrique.

8. Dispositif selon la revendication 7, dans lequel le dispositif d'exploitation de données a à son sortie un discriminateur (14, 15) étant connecté au relais (12).

9. Dispositif selon des revendications 1 à 7, dans lequel le dispositif d'exploitation de données fournie un signal de sortie (R, S) à un afficheur LCD (13) numérique indiquant une valeur de risque (R) étant en relation directe avec une surtension possible.

10. Dispositif selon dés revendications 4 à 9, dans lequel le processeur de signaux (10) possède un quartz (11) gérant la fréquence de fonctionnement.
